# EUROPÄISCHE PATENTANMELDUNG

(11) **EP 2 927 460 A1**
(43) Veröffentlichungstag der Anmeldung: **07.10.2015**
(21) Anmeldenummer: 14162725.7
(22) Anmeldetag: 31.03.2014
(51) Int. Cl.: F02C 7/10, F01D 25/24

(54) **Gasturbine**

(71) Anmelder: Siemens Aktiengesellschaft, 80333 München (DE)
(72) Erfinder: Wilke, Martin, 45276 Essen (DE)

(57) **Zusammenfassung**

Die Erfindung gibt ein Gasturbine (1) an, welche einen Verdichter (2), ein Mittelgehäuse (12), wenigstens eine Brennkammer (28), eine Expansionsturbine (26), und einen Wärmetauscher (68) umfasst, wobei die oder jede Brennkammer (28) mit der Expansionsturbine (26) strömungstechnisch über ein Innengehäuse (24) verbunden ist, welches durch den Innenraum (10) des Mittelgehäuses (12) geführt ist, wobei der Verdichter (2) gegen den Innenraum (10) des Mittelgehäuses (12) strömungstechnisch durch eine ringförmige Sammelkammer (16) abgegrenzt wird, welche mit einem Auslass (8) des Verdichters (2) verbunden ist, und welche eine Anzahl von Ableitungen (20) aufweist, die im Betrieb mit der Kaltseite (72) des Wärmetauschers (68) verbunden sind.

## Beschreibung

Die Erfindung betrifft eine Gasturbine, umfassend einen Verdichter, ein Mittelgehäuse, wenigstens eine Brennkammer, und eine Expansionsturbine, wobei die oder jede Brennkammer mit der Expansionsturbine strömungstechnisch über ein Innengehäuse verbunden ist, welches durch den Innenraum des Mittelgehäuses geführt ist.

In einer Gasturbine wird die Verbrennungswärme eines Brennstoffes in mechanische Arbeit umgewandelt. Der thermodynamische Kreisprozess, welcher diese Umwandlung beschreibt, entspricht näherungsweise dem Joule-Kreisprozess.

Dabei wird zunächst ein sauerstoffhaltiges Arbeitsgas, in der Praxis meist Luft, von einer Verdichterkammer verdichtet, wobei es sich von einer Ausgangstemperatur *T₁* auf *T₂* erwärmt, und der Druck steigt. Im zweiten Schritt wird dem Arbeitsgas in einer Brennkammer bei konstantem Druck durch Verbrennen des zugemischten Brennstoffes Wärme zugeführt, wodurch die Temperatur weiter auf *T₃* ansteigt. Das verdichtete, erhitzte Arbeitsgas verrichtet dann mechanische Arbeit, indem es expandiert und dabei über Schaufeln die Turbine antreibt. Hierbei sinkt die Temperatur auf *T₄*. Auch der Druck sinkt. Ein Teil der mechanischen Arbeit, welche an der Turbine gewonnen wird, kann zur Verdichtung im ersten Schritt herangezogen werden. In einem letzten Schritt wird dem Arbeitsgas bei konstantem Druck durch Kühlung Abwärme entzogen, wodurch die Temperatur wieder auf *T₁* absinkt. Für die Näherung eines idealen Gases ergibt sich hierbei der Wirkungsgrad des Prozesses zu *η*=1-(*T*₄-*T*₁)/(*T*₃-*T*₂).

Aufgrund der starken Zunahme regenerativer Energieerzeugung in immer mehr Industrieländern kommt Wärmekraftwerken, welche Gasturbinen einsetzen, eine immer höhere Bedeutung zu. Die fehlende Planungssicherheit, welche eine Energieerzeugung durch Solarenergie oder Windkraft aus naturgegebenen Gründen mit sich bringt, muss durch ausreichende Reservekapazitäten in der Erzeugung ausgeglichen werden, welche zudem möglichst schnell die angeforderte Leistung bereitzustellen imstande sind. Hier sind Kraftwerke, welche mit Gasturbinen betrieben werden, infolge der Flüchtigkeit des verwendeten Brennstoffes gegenüber den thermodynamisch trägeren Kohlekraftwerken oder gar Kernreaktoren deutlich im Vorteil.

Der Wirkungsgrad einer Gasturbine als Quotient der erzeugten Energie über den totalen Energieinhalt des eingesetzten Brennstoffes beträgt selbst bei einer modernen Anlage deutlich unter 50%, da die durch Verbrennung zugeführte Wärme als Abwärme wieder abgeführt wird, und somit der Energieinhalt der Abwärme nach der Expansion des Arbeitsgas nicht mehr genutzt wird.

Der Wirkungsgrad kann jedoch durch Nutzung dieser Abwärme erhöht werden, indem beispielsweise in einem zweiten Kreislauf durch die Abwärme eine Dampfturbine eines zweiten Wärmekraftwerkes betrieben wird (sogenannte "combined cycle"- oder "Gas-und-Dampf"-Technologie). Hierdurch kann der Wirkungsgrad um den Grad der Abwärme, welche der Dampfturbine zugeführt werden kann, verbessert werden. Für diese Verbesserung des Wirkungsgrades steigt jedoch der Systemaufwand an, da nun der gesamte Dampfkreislauf an die Gasturbine anzubinden und regelungstechnisch auf diese abzustimmen ist, wodurch sich die Investitionskosten einer Anlage erhöhen. Überdies können viele bereits existierende Wärmekraftwerke mit Gasturbinen aufgrund der Dimensionen der Komponenten eines Dampfkreislaufes nicht ohne Weiteres mit einem solchen nachgerüstet werden.

Eine mögliche weiterführende Lösung kann hierbei sein, die Abwärme des Abgases der Gasturbine durch die Einbindung in einen Rekuperatorprozess dazu zu nutzen, das im ersten Schritt vorverdichtete Arbeitsgas weiter zu erwärmen, bevor die Verbrennungswärme des Brennstoffes zugeführt wird. Da in vielen Gasturbinen die Temperatur *T₂* des vorverdichteten Arbeitsgases unter der Abwärmetemperatur *T₄* liegt, muss im idealen Modell die dieser Differenz *T*₄-*T*₂ entsprechende Wärmemenge dem Arbeitsgas nicht durch den Energieinhalt des Brennstoffes zugeführt werden, sondern kann eingespart werden, was zu einer entsprechenden Erhöhung des Wirkungsgrades führt.

Ein ungelöstes Problem stellt hierbei die technische Umsetzung der Einbindung insbesondere eines bestehenden Gasturbinen-Systems in einen Rekuperatorprozess dar, wobei der Entnahme des vorverdichteten Arbeitsgases und dessen Weiterleitung zum Wärmetauscher hierbei aufgrund der räumlichen Beschränkungen im Inneren der Gasturbine, insbesondere im Bereich des Verdichters, eine besondere Rolle zukommt.

Es ist Aufgabe der Erfindung, in einer Gasturbine das Arbeitsgas auf möglichst einfache Weise einem Wärmetauscher zuzuführen.

Die Aufgabe wird erfindungsgemäß gelöst durch eine Gasturbine, umfassend einen Verdichter, ein Mittelgehäuse, wenigstens eine Brennkammer, eine Expansionsturbine, und einen Wärmetauscher, wobei die oder jede Brennkammer mit der Expansionsturbine strömungstechnisch über ein Innengehäuse verbunden ist, welches durch den Innenraum des Mittelgehäuses geführt ist, wobei der Verdichter gegen den Innenraum des Mittelgehäuses strömungstechnisch durch eine ringförmige Sammelkammer abgegrenzt wird, welche mit einem Auslass des Verdichters verbunden ist, und welche eine Anzahl von Ableitungen aufweist, die im Betrieb mit der Kaltseite des Wärmetauschers verbunden sind.

Unter der Kaltseite des Wärmetauschers ist hierbei die Gesamtheit der Zuleitungen zum Bereich, in welchem im Wärmetauscher die Wärmeübertragung zwischen dem diesen durchströmenden Arbeitsgas und der Wärmezufuhr stattfindet, zu verstehen. Insbesondere kann hierbei dem Wärmetauscher Wärme durch die Abwärme der Gasturbine zugeführt werden, und insbesondere kann das im Wärmetauscher erwärmte Arbeitsgas dabei dem oder jedem Brenner der Brennkammer zur Sauerstoffversorgung zugeführt werden. Unter dem Verdichter ist hierbei die Gesamtheit aller einzelnen, in sich abgeschlossenen Einheiten zu verstehen, welche innerhalb der Gasturbine den technischen Zweck der Verdichtung des Arbeitsgases erfüllen und strömungstechnisch dem oder jedem Brenner vorgelagert sind.

Der Erfindung liegen hierbei folgende Überlegungen zugrunde:
Die Konzeption einer Gasturbine erfordert komplexe strömungsund werkstofftechnische sowie thermodynamische Modellierungen und numerische Berechnungen, welche zu einem Großteil durch Praxistests an Prototypen verifiziert werden müssen. Jede Modifikation an einem bestehenden Gasturbinen-System erfordert somit auch eine Anpassung der besagten Modellierungen und Berechnungen. Es ist somit von erheblichem Vorteil, einen Mechanismus zur Entnahme des vorverdichteten Arbeitsgases und
zu dessen Weiterleitung zu einem Wärmetauscher a priori so zu gestalten, dass er unter möglichst geringen baulichen Veränderungen in ein bestehendes Konzept einer Gasturbine integriert werden kann. Überdies wird hierdurch auch die Möglichkeit eröffnet, eine bereits in Betrieb genommene Gasturbine, bei welcher kein Wärmetauscher vorgesehen ist, unter vergleichsweise geringem Aufwand nachzurüsten.

Unter der Vorgabe möglichst geringer Modifikationen erscheint es somit zunächst naheliegend, die oder jede Ableitung zur Entnahme des Arbeitsgases direkt am Auslass des Verdichters anzuordnen. Eine wichtige Erkenntnis der Erfindung ist nun jedoch, dass dieses Vorgehen strömungstechnisch unvorteilhaft sein könnte, da hierdurch am Auslass des Verdichters über dessen Querschnittsfläche in Richtung der jeweiligen Ableitung ein Druckgradient entstehen könnte. Dies könnte zu einer turbulenten Strömung und zu einer sehr inhomogenen Druckverteilung im Verdichter führen, was die Effizienz des Verdichtungsprozesses, also die Verdichtungsleistung je eingesetzter Energieeinheit, erheblich verringern würde.

Demgegenüber schlägt die Erfindung vor, trotz des zwischen dem Verdichter und dem Innengehäuse beschränkten Raumes im Mittelgehäuse am Auslass des Verdichters eine Sammelkammer vorzusehen, von welcher die oder jede Ableitung zum Wärmetauscher geführt ist. In dieser Sammelkammer ist nun eine günstige Druckverteilung möglich, ohne dass dadurch erhebliche konstruktive Veränderungen an der Gasturbine notwendig werden. Der neu entstehende Aufwand hinsichtlich der Konzeption beschränkt sich hierbei auf die Strömungsführung des Arbeitsgases am Auslass des Verdichters, in der Sammelkammer selbst und in der jeweiligen Ableitung.

Bevorzugt ist die Sammelkammer durch eine vom Auslass des Verdichters bis zum Mittelgehäuse verlaufende Wandung gegen den Innenraum des Mittelgehäuses abgegrenzt. Insbesondere ist hierbei die oder jede Ableitung durch den Teil des Gehäuses der Gasturbine geführt, welcher den Verdichter umgibt, und an der Fuge der Wandung an das Mittelgehäuse anschließt. Dies ist insbesondere von Vorteil, wenn in einem bestehenden Konzept, auf dessen Basis die Gasturbine konstruiert oder nachgerüstet werden soll, der Bauraum im Mittelgehäuse eingeschränkt ist, beispielsweise durch eine räumliche Nähe vom Auslass des Verdichters zum Innengehäuse. Gegebenenfalls kann hierbei der Auslass des Verdichters an den zu Verfügung stehenden Bauraum angepasst werden, so dass die Strömungsführung, in axialer Richtung betrachtet, durch einen Krümmer vom Mittelgehäuse weg geführt ist. Insbesondere kann der Krümmer dabei rotationssymmetrisch ausgestaltet sein, so dass die Wandung, welche die Sammelkammer gegen den Innenraum des Mittelgehäuses abgegrenzt, durch eine Anzahl von Schottblechen gebildet wird, die von einer Kante des Krümmers zum Mittelgehäuse verlaufen. An der Fuge der Wandung kann das Mittelgehäuse hierbei insbesondere eine umlaufende Nut aufweisen, um die strömungstechnische Abgrenzungswirkung der Wandung zu verbessern.

Zweckmäßigerweise ist der Auslass des Verdichters als ein ringförmiger Austrittsdiffusor ausgebildet. Dies ist eine besonders häufig gewählte konstruktive Variante in Gasturbinen, da über den Diffusor durch die dortige Verlangsamung der Strömungsgeschwindigkeit des Arbeitsgases für dieses noch ein weiterer Druckanstieg erzielt werden kann. Ein ringförmiger Diffusor sorgt zudem für eine möglichst homogene Druckverteilung und einen gleichmäßigen Massestrom des Arbeitsgases aus dem Verdichter in die Sammelkammer. Insbesondere kann hierbei der Austrittsdiffusor in axialer Richtung einen Krümmer weg vom Mittelgehäuse aufweisen, wodurch der für die Sammelkammer notwendige Bauraum verringert wird, da diese somit in unmittelbarer Umgebung des Verdichters angeordnet werden kann.

Für eine besonders homogene Druckverteilung in des Sammelkammer und einen besonders gleichmäßigen Massestrom des Arbeitsgases aus der Sammelkammer in die oder jede Ableitung kann insbesondere eine Mehrzahl an Ableitungen drehsymmetrisch von der Sammelkammer wegführen, bzw. eine Mehrzahl von Gruppen von Ableitungen jeweils drehsymmetrisch von der Sammelkammer wegführen.

Als vorteilhaft erweist es sich, wenn die oder jede Brennkammer als eine Silobrennkammer ausgebildet ist. In diesem Fall kann die Sammelkammer zwischen dem Innengehäuse, welches von der oder jeder Brennkammer zur Expansionsturbine führt, und dem Verdichter angeordnet werden, was konstruktiv besonders günstig ist, da nur die Sammelkammer selbst gegenüber einem bereits existierenden Konzept ausgestaltet werden muss.

Günstigerweise weist hierbei die oder jede Silobrennkammer eine einen Brennraum begrenzende innere Wandung und eine äußere Wandung auf, wobei die äußere Wandung die innere Wandung unter Ausbildung eines Hohlraumes umgibt, wobei die innere Wandung in das Innengehäuse übergeht, und wobei der Hohlraum in den Innenraum des Mittelgehäuses übergeht. Im Brennraum einer Silobrennkammer können im Betrieb der Gasturbine Temperaturen von bis zu 1400°C auftreten, was zu besonderen Belastbarkeitsanforderungen an das Material der inneren Wandung führt. Durch die doppelwandige Ausgestaltung der Brennkammer kann der Hohlraum mit einem Gas zur besseren Kühlung der inneren Wandung durchströmt werden, wodurch sich die besagten Belastbarkeitsanforderungen verringern und entsprechend Kosten reduziert werden können.

Als weiter vorteilhaft erweist es sich, wenn von der oder jeder Ableitung über einen Bypass eine direkte strömungstechnische Verbindung zum Innenraum des Mittelgehäuses herstellbar ist. Hierdurch kann über den Bypass ein Teil des vorverdichteten Arbeitsgases in den Innenraum des Mittelgehäuses geleitet werden, wo das Arbeitsgas das Innengehäuse umströmen kann. Da im Betrieb durch das Innengehäuse das in der Brennkammer verbrannte Brennstoff-Arbeitsgas-Gemisch zur Expansionsturbine hin geführt wird, können am Innengehäuse hohe Temperaturen entstehen, was zu besonderen Belastbarkeitsanforderungen an das Material des Innengehäuses führen kann. Dadurch, dass das Innengehäuse von einem Teil des vorverdichteten Arbeitsgases umströmt wird, kann ein kühlender Effekt erzielt werden, was die besagten Anforderungen verringert.

Überdies ermöglicht ein Bypass von der Ableitung zum Innenraum des Mittelgehäuses, den Innenraum des Mittelgehäuses unter ähnlichem Druck zu halten wie den Brennraum der Brennkammer und den darin übergehenden Innenraum des Innengehäuses. Eine geringe Druckdifferenz zwischen den genannten Räumen vereinfacht die bauliche Ausgestaltung des Innengehäuses.

Zweckmäßigerweise weist hierbei der Bypass eine Anzahl von Ventilen und eine Anzahl von jeweils mit einem Ventil verbundenen Rohrleitungen auf, wobei die Verbindung von der oder jeder Ableitung zum Innenraum des Mittelgehäuses über je ein Ventil und eine Rohrleitung führt. Über ein oder mehrere Ventile lässt sich der Massestrom des vorverdichteten Arbeitsgases aus dem Verdichter in den Innenraum des Mittelgehäuses und somit die Kühlwirkung insbesondere am Innengehäuse besonders einfach regeln.

Günstigerweise ist dabei das oder jedes Ventil innerhalb des Mittelgehäuses an der jeweiligen Ableitung angeordnet. Somit muss die entsprechende Rohrleitung nicht durch das Mittelgehäuse aus der Gasturbine herausgeführt werden, was die notwendigen konstruktiven Änderungen gegenüber einem bereits existierenden Konzept gering hält.

Alternativ dazu kann das oder jedes Ventil jedoch auch außerhalb der Gasturbine an der jeweiligen Ableitung angeordnet sein. Dies kann von Vorteil sein, wenn eine besonders einfache Erreichbarkeit des oder jedes Ventils im Betrieb gewünscht ist, beispielsweise, wenn die Gasturbine nicht im Dauereinsatz betrieben werden soll, sondern häufig angefahren und nach einer gewissen Betriebsdauer wieder heruntergefahren werden soll, wodurch sich möglicherweise ein besonderer strömungstechnischer Regelbedarf ergeben kann.

Die innere Wandung der oder jeder Silobrennkammer weist günstigerweise eine Vielzahl an Bohrungen auf. Durch derartige Bohrungen kann vorverdichtetes Arbeitsgas aus dem Hohlraum infolge der Druckdifferenz in geringen Mengen in den Brennraum strömen, wo es zur Kühlung des Materials der inneren Wandung beiträgt. Dies reduziert weiter die Temperatur, für die die Werkstoffe, welche für die innere Wandung verwendet werden, ausgelegt werden sollten.

Vorteilhafterweise weist das Innengehäuse eine Vielzahl an Bohrungen auf. Durch derartige Bohrungen kann vorverdichtetes Arbeitsgas aus dem Innenraum des Mittelgehäuses infolge der Druckdifferenz in geringen Mengen in den mit dem Brennraum verbundenen Innenraum des Innengehäuses strömen, wo es zur Kühlung des Materials des Innengehäuses beiträgt. Dies reduziert weiter die Temperatur, für die die Werkstoffe, welche für das Innengehäuses verwendet werden, ausgelegt werden sollten.

Die Erfindung nennt weiter ein Wärmekraftwerk mit einer vorbeschriebenen Gasturbine. Die Vorteile der Gasturbine und ihrer Weiterbildungen können hierbei sinngemäß auf das Wärmekraftwerk übertragen werden.

Nachfolgend wird ein Ausführungsbeispiel der Erfindung anhand einer Zeichnung näher erläutert. Hierbei zeigen jeweils schematisch:
- FIG 1: in einer Axialschnittdarstellung einen Ausschnitt einer Gasturbine mit einer Sammelkammer am Auslass des Verdichters,
- FIG 2: in einer Querschnittdarstellung eine Gasturbine mit einer Silobrennkammer, und
- FIG 3: ein Wärmekraftwerk mit einer Gasturbine, welche einen Wärmetauscher aufweist.

Einander entsprechende Teile und Größen sind in allen Figuren jeweils mit gleichen Bezugszeichen versehen.

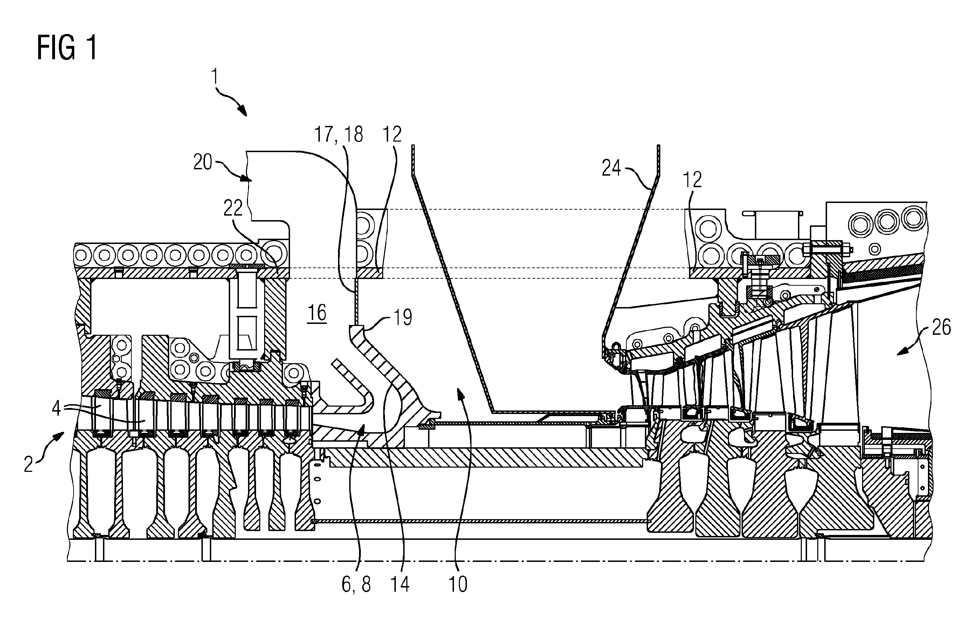

In FIG 1 ist in einer Axialschnittdarstellung ein Ausschnitt einer Gasturbine 1 dargestellt. Die Gasturbine 1 umfasst einen Verdichter 2 mit Verdichterkammern 4, welche zu einem als Austrittsdiffusor 6 ausgebildeten Auslass 8 führen. Der Austrittsdiffusor 6 weist hierbei, vom Innenraum 10 des Mittelgehäuses 12 wegführend, einen im Querschnitt U-förmige Krümmer 14 auf. Über den Austrittsdiffusor 6 ist mit dem Verdichter 2 eine Sammelkammer 16 verbunden, welche strömungstechnisch vom Innenraum 10 des Mittelgehäuses 12 durch eine Wandung 17 getrennt ist. Die umlaufende Wandung 17 wird dabei durch ein umlaufendes Schottblech 18 gebildet, welches von der äußeren Kante 19 des Krümmers 14 radial zum Mittelgehäuse 12 reicht. Von der Sammelkammer 16 ist eine Ableitung 20 durch das an das Mittelgehäuse 12 anschließende, den Verdichter 2 umgebende Vordergehäuse 22 geführt und in nicht näher dargestellter Weise mit einem Wärmetauscher verbunden.

Durch das Mittelgehäuse 12 ist ein Innengehäuse 24 geführt, welches den Brennraum einer nicht dargestellten Silobrennkammer mit der Expansionsturbine 26 verbindet. Im Betrieb der Gasturbine 1 wird im Verdichter 2 Luft als Arbeitsgas verdichtet. Diese strömt über den Austrittsdiffusor 6 in die Sammelkammer 16 und wird über die Ableitung 20 und ein in der Zeichnung nicht dargestelltes Leitungssystem zu einem Wärmetauscher geführt, wobei ein Teil der Luft in den Innenraum 10 des Mittelgehäuses 12 zurückgeleitet wird. Hier kann die vorverdichtete Luft zur Kühlung des Innengehäuses 24 beitragen, durch welches vom Brennraum ein verbranntes Brennstoff-LuftGemisch zur Expansionsturbine 26 strömt, wodurch am Innengehäuse erhöhte Temperaturen entstehen. Durch die Kühlwirkung der teilweise in den Innenraum des Innengehäuses zurückgeleiteten Luft kann das Material des Innengehäuses für niedrigere Maximaltemperaturen ausgelegt werden.

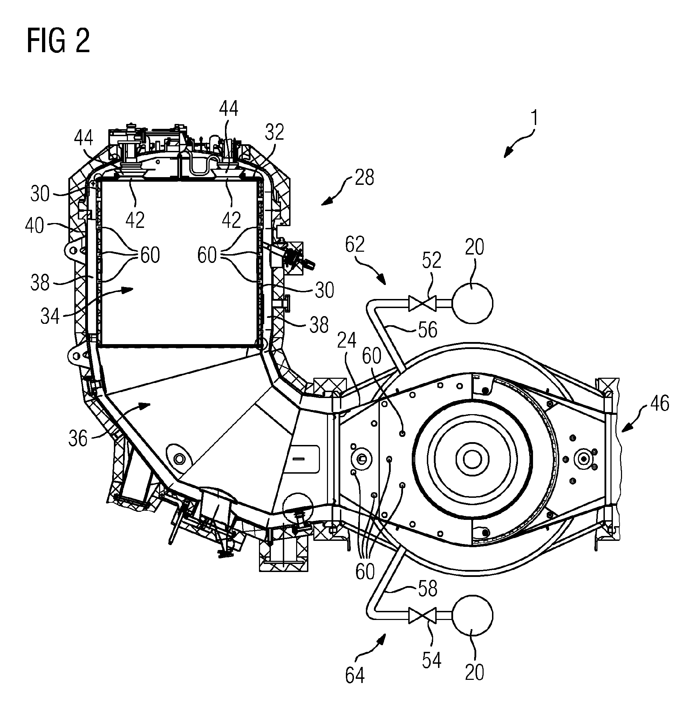

In FIG 2 ist in einer Querschnittdarstellung eine Gasturbine 1 mit einer Silobrennkammer 28 gezeigt. Die Ansicht ist dabei hinter der Sammelkammer in Richtung der Expansionsturbine genommen. Die Silobrennkammer 28 umfasst eine innere Wandung 30, welche zusammen mit dem Flammrohrboden 32 den Brennraum 34 des Flammrohres 36 begrenzt. Die innere Wandung 30 und der Flammrohrboden 32 werden unter Ausbildung eines Hohlraumes 38 von einer äußeren Wandung 40 umgeben. Durch Öffnungen 42 im Flammrohrboden 32 münden Brenner 44 in den Brennraum 34.

Die innere Wandung 30 geht an ihrem achsnahen Ende in das Innengehäuse 24 über, so dass der Brennraum 34 strömungstechnisch mit dem Innenraum des Innengehäuses 24 verbunden ist. Die äußere Wandung 40 geht in das Mittelgehäuse 12 über, so dass der Hohlraum 38 direkt mit dem Innenraum 10 des Mittelgehäuses 12 verbunden ist. Am gegenüberliegenden Ende 46 geht das Innengehäuse 24 in die innere Wandung einer weiteren, hier nicht näher dargestellten Silobrennkammer über, welche im Wesentlichen baugleich und symmetrisch zur Silobrennkammer 28 ist.

Vor dem Innengehäuse 24 ist die hier nicht dargestellte Sammelkammer angeordnet, welche über den Krümmer mit dem Austrittsdiffusor des Verdichters verbunden ist. Von der Sammelkammer führen zwei Ableitungen 20 durch das Mittelgehäuse 12 von der Sammelkammer weg, welche hier im Querschnitt dargestellt sind. Die Ableitungen 20 führen zur Kaltseite eines nicht näher dargestellten Wärmetauschers. Von den Ableitungen 20 führt jeweils über ein Ventil 52, 54 eine Rohrleitung 56, 58 durch das Mittelgehäuse 12 zurück in den Innenraum 10 des Mittelgehäuses 12. Das Innengehäuse 24 weist ebenso wie die innere Wandung 30 eine Vielzahl an Bohrungen 60 auf.

Im Betrieb der Gasturbine 1 wird durch die Sammelkammer die vom Verdichter vorverdichtete Luft entnommen und über die Ableitungen 20 in Richtung der Kaltseite des Wärmetauschers geleitet. Die Ventile 52, 54 und die Rohrleitungen 56, 58 bilden hierbei jeweils einen Bypass 62, 64, über welchen unter Kontrolle des Massestroms ein Teil der Luft zurück in den Innenraum 10 des Mittelgehäuses 12 und damit auch in den Hohlraum 38 zwischen der inneren Wandung 30 und der äußeren Wandung 40 strömen kann. Hierdurch kann die vorverdichtete Luft zur Kühlung des Innengehäuses 42 und der inneren Wandung 30 beitragen, welche vom im Brennraum 34 verbrannten Brennstoff-Luft-Gemisch überströmt werden. Die Bohrungen 60 führen hierbei dazu, dass die verdichtete Luft, welche über die Bypässe 62, 64 zurückgeleitet wird, ins Innere des Flammrohres 36 bzw. des Innengehäuses 24 strömen kann, was weiter die Kühlwirkung verbessert. Durch den über die Ventile 52, 54 kontrollierbaren Massestrom der zur Kühlung verwendeten Luft kann hierbei ein thermodynamisch möglichst effizienter Arbeitspunkt eingestellt werden.

Von der Warmseite des Wärmetauschers ist die Luft zur Sauerstoffversorgung der Brenner 44 in einer Weise zurückzuführen, welche hier nicht Gegenstand der Erfindung ist.

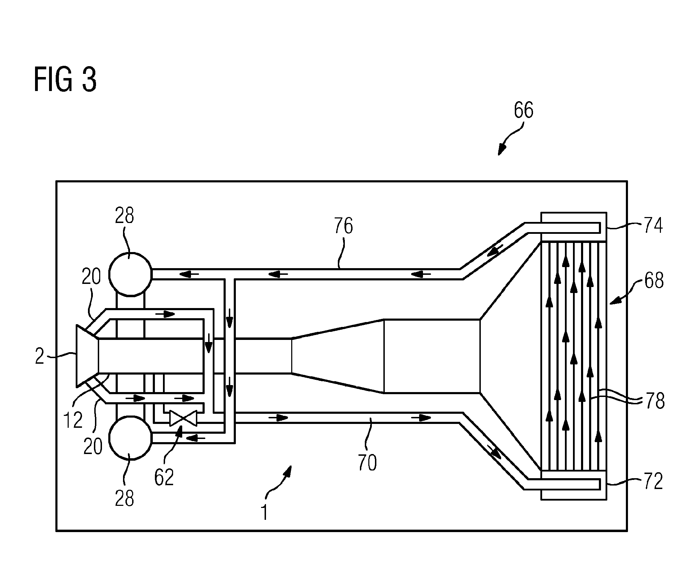

In FIG 3 ist schematisch ein Wärmekraftwerk 66 mit einer Gasturbine 1 dargestellt, welche einen Wärmetauscher 68 aufweist. Aus dem Mittelgehäuse 12 führen von der in der Zeichnung nicht dargestellten Sammelkammer in der Nähe des Verdichters 2 Ableitungen 20 zu einem Leitungssystem 70, welches einen Bypass 62 aufweist, der wieder zurück durch das Mittelgehäuse 12 führt. Das Leitungssystem 70 ist mit der Kaltseite 72 des Wärmetauschers 68 verbunden. Von der Warmseite 74 des Wärmetauschers 68 führt eine Leitung 76 in Richtung der beiden Silobrennkammern 28.

Die in der Sammelkammer entnommene Luft wird durch die Ableitungen 20 zum Leitungssystem 70 geführt. Ein Teil der Luft wird dabei über den Bypass 62 zur Kühlung wieder zurück in den Innenraum des Mittelgehäuses 12 geleitet. Die restliche Luft wird durch das Leitungssystem 70 zum Wärmetauscher 68 geleitet und dort in feinen Rohren 78, welche von der Abwärme der Silobrennkammern 28 umströmt werden, erwärmt. Die so erwärmte Luft wird nun über die Leitung 76 zu den Silobrennkammern 28 geführt und dort in einer Weise, welche nicht Gegenstand der Erfindung ist, der Sauerstoffversorgung der jeweiligen Brenner zugeführt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Gasturbine (1), umfassend einen Verdichter (2), ein Mittelgehäuse (12), wenigstens eine Brennkammer (28), eine Expansionsturbine (26), und einen Wärmetauscher (68),
wobei die oder jede Brennkammer (28) mit der Expansionsturbine (26) strömungstechnisch über ein Innengehäuse (24) verbunden ist, welches durch den Innenraum (10) des Mittelgehäuses (12) geführt ist,
wobei der Verdichter (2) gegen den Innenraum (10) des Mittelgehäuses (12) strömungstechnisch durch eine ringförmige Sammelkammer (16) abgegrenzt wird, welche mit einem Auslass (8) des Verdichters (2) verbunden ist, und welche eine Anzahl von Ableitungen (20) aufweist, die im Betrieb mit der Kaltseite (72) des Wärmetauschers (68) verbunden sind.

2. Gasturbine (1) nach Anspruch 1, wobei die Sammelkammer (16) durch eine vom Auslass (8) des Verdichters (2) bis zum Mittelgehäuse (12) verlaufende Wandung (17) gegen den Innenraum (10) des Mittelgehäuses (12) abgegrenzt ist.

3. Gasturbine (1) nach Anspruch 1 oder Anspruch 2,
wobei der Auslass (8) des Verdichters (2) als ein ringförmiger Austrittsdiffusor (6) ausgebildet ist.

4. Gasturbine (1) nach einem der vorhergehenden Ansprüche, wobei die oder jede Brennkammer als eine Silobrennkammer (22) ausgebildet ist.

5. Gasturbine (1) nach Anspruch 4,
wobei die oder jede Silobrennkammer (28) eine einen Brennraum (34) begrenzende innere Wandung (30) und eine äußere Wandung (40) aufweist, wobei die äußere Wandung (40) die innere Wandung (30) unter Ausbildung eines Hohlraumes (38) umgibt, wobei die innere Wandung (30) in das Innengehäuse (24) übergeht, und wobei der Hohlraum (38) in den Innenraum (10) des Mittelgehäuses (12) übergeht.

6. Gasturbine (1) nach einem der vorhergehenden Ansprüche, wobei von der oder jeder Ableitung (20) über einen Bypass (62, 64) eine direkte strömungstechnische Verbindung zum Innenraum (10) des Mittelgehäuses (12) herstellbar ist.

7. Gasturbine (1) nach Anspruch 6,
wobei der Bypass (62, 64) eine Anzahl von Ventilen (52, 54) und eine Anzahl von jeweils mit einem Ventil (52, 54) verbundenen Rohrleitungen (56, 58) aufweist, und wobei die Verbindung von der oder jeder Ableitung (20) zum Innenraum (10) des Mittelgehäuses (12) über je ein Ventil (52, 54) und eine Rohrleitung (56, 58) führt.

8. Gasturbine (1) nach Anspruch 7,
wobei das oder jedes Ventil (52, 54) innerhalb des Mittelgehäuses (12) an der jeweiligen Ableitung (20) angeordnet ist.

9. Gasturbine (1) nach Anspruch 7,
wobei das oder jedes Ventil (52, 54) außerhalb der Gasturbine (1) an der jeweiligen Ableitung (20) angeordnet ist.

10. Gasturbine (1) nach einem der Ansprüche 5 bis 9,
wobei die innere Wandung (30) der oder jeder Silobrennkammer (28) eine Vielzahl an Bohrungen (60) aufweist.

11. Gasturbine (1) nach einem der vorhergehenden Ansprüche, wobei das Innengehäuse (24) eine Vielzahl an Bohrungen (60) aufweist.

12. Wärmekraftwerk (66) mit einer Gasturbine (1) nach einem der vorhergehenden Ansprüche.
